# EUROPÄISCHE PATENTSCHRIFT

(11) **EP 3 705 330 B1**
(45) Veröffentlichungstag und Bekanntmachung des Hinweises auf die Patenterteilung: **01.05.2024**
(21) Anmeldenummer: 19161354.6
(22) Anmeldetag: 07.03.2019
(51) Int. Cl.: B60J 5/06, B62D 33/02

(54) **PLANENAUFBAU MIT MITTELRUNGENARRETIERUNG**
CANVAS COVER WITH MIDDLE STANCHION LOCKING
STRUCTURE DE BÂCHE POURVUE DE DISPOSITIF D'ARRÊT DE MONTANT COULISSANT

(43) Veröffentlichungstag der Anmeldung: 09.09.2020
(73) Patentinhaber: Schmitz Cargobull AG, 48341 Altenberge (DE)
(72) Erfinder: KRÜGER, Mirko, 48341 Altenberge (DE)
(74) Vertreter: Cohausz & Florack

(56) Entgegenhaltungen:
- EP-A1- 3 293 027
- EP-A1- 3 293 096
- GB-A- 1 597 532
- GB-A- 2 402 112
- Schmitz Cargobull: "S.CS/S.PR Planenfahrzeuge", , 13 September 2016 (2016-09-13), XP055875837, Internet Retrieved from the Internet: URL:http://www.cargobull.com/de/Download-C enter_216_358.html [retrieved on 2021-12-22]

## Beschreibung

Die Erfindung betrifft einen Planenaufbau eines Nutzfahrzeugs, insbesondere eines Lastkraftwagens, Anhängers oder Sattelaufliegers, mit einem Boden, einem an einer Längsseite des Planenaufbaus vorgesehenen Längsholm eines Dachs, wenigstens einer mit dem Längsholm verbundenen Mittelrunge und wenigstens einer Seitenplane zum Verschließen der Längsseite des Planenaufbaus, wobei die Verbindung zwischen der wenigstens einen Mittelrunge und dem Längsholm von einer Gebrauchsstellung zum Abstützen des Dachs gegenüber dem Boden in eine Nichtgebrauchsstellung zum Verschieben der Mittelrunge entlang des Längsholms und zurück verstellbar vorgesehen ist, wobei der Längsholm an einer zum Laderaum hinweisenden Innenseite oder einer vom Laderaum wegweisenden Außenseite wenigstens eine Holmarretierung aufweist, wobei die wenigstens eine Mittelrunge an einer zum Laderaum hinweisenden Innenseite oder einer vom Laderaum wegweisenden Außenseite eine mit der Holmarretierung korrespondierende Rungenarretierung aufweist, wobei wenigstens eine Rungenarretierung und wenigstens eine Holmarretierung in wenigstens einer Längsrichtung des Längsholms in der Gebrauchsstellung formschlüssig und/oder reibschlüssig in Eingriff und in der Nichtgebrauchsstellung außer Eingriff sind.

Nutzfahrzeuge, beispielsweise in Form von Lastkraftwagen, Anhängern und Sattelaufliegern, mit Planenaufbauten sind insbesondere für den Transport von Gütern, vorzugsweise Stückgütern, im öffentlichen Straßenverkehr vorgesehen. Bei den Planenaufbauten sind die Seitenwände und bedarfsweise auch das Dach durch wenigstens eine Planeneinheit verschlossen. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Das Dach von Planenaufbauten weist typischerweise seitlich angeordnete Längsholme auf, die unter Bildung einer Rahmenstruktur quer zum Nutzfahrzeug über Spriegel miteinander verbunden sind. Die Rahmenstruktur trägt dann die das Dach verschließende Dachplane, wobei die Rahmenstruktur durch Rungen getragen wird. Die Eckrungen befinden sich an den vorderen beiden Ecken und den hinteren beiden Ecken des Nutzfahrzeugs, während sich die Mittelrungen an den beiden Längsseiten des Planenaufbaus zwischen den beiden jeweils zugeordneten Eckrungen befinden. Zum Be- und Entladen des Planenaufbaus können die Mittelrungen aus einer Gebrauchsstellung, in der die Mittelrungen das Dach gegenüber dem Boden abstützen, in eine Nichtgebrauchsstellung und wieder zurück verstellt werden. In der Nichtgebrauchsstellung können die Mittelrungen entlang des Längsholms nach vorne und nach hinten verschoben werden, so dass sich eine breite Öffnung an der jeweiligen Seitenwand bildet, über die Ladung einfach be- oder entladen werden kann. Die vorderen Eckrungen können dabei einen Teil der Stirnwand und die hinteren Eckrungen einen Teil der Rückwand bzw. des Rückwandportals bilden, das die rückwärtigen Flügeltüren trägt und das durch die Flügeltüren verschlossen werden kann.

Eine Seitenwandplane kann zum Zwecke des Aufschiebens und Verschließens der entsprechenden Seitenwand mit Schlitten am zugehörigen Längsholm gehalten sein, wobei die Schlitten Planenlaufrollen aufweisen können, die über Planenlaufflächen des Längsholms in Längsrichtung des Längsholms abrollen können. Zum Verschließen der Seitenwand durch die Seitenwandplane wird die Seitenwandplane formschlüssig mit einer vorderen Eckrunge und einer hinteren Eckrunge verbunden. Hierzu können entweder Hakenprofile oder Planenspannrohre genutzt werden.

Um eine Höherverstellung des Dachs zum Be- und Entladen oder zum Einstellen unterschiedlicher Fahrstellungen zu ermöglichen, sind die Eckrungen und Mittelrungen bedarfsweise höhenverstellbar ausgebildet. Dazu sind die Rungen mit einem Rungenschiebling versehen, der mit dem Dach, insbesondere mit dem Längsholm, verbunden ist. Der Rungenschiebling ist dabei teilweise in einem Rungengrundkörper aufgenommen und wenigstens teilweise aus dem Rungengrundkörper nach oben ausziehbar vorgesehen. Zudem kann der Rungenschiebling in unterschiedlichen Höhen relativ zum Rungengrundkörper am Rungengrundkörper festlegbar sein. Der Rungengrundkörper ist dabei fest mit dem Boden des Planenaufbaus verbunden oder wenigstens zu verbinden.

Von den zuvor beschriebenen Planenaufbauten zu unterscheiden sind die sogenannten Kofferaufbauten, die eine feste Stirnwand, feste Seitenwände und ein festes Dach aufweisen, welche den Laderaum begrenzen und aus mehrlagigen Paneelen gebildet werden können. Kofferaufbauten sind aufgrund der festen Wände und des festen Dachs in besonderem Maße für den Transport von feuchtigkeitsempfindlichen und/oder temperaturempfindlichen Gütern, also beispielsweise für den sogenannten Trockentransport und/oder den Kühltransport, geeignet.

Planenaufbauten und Kofferaufbauten weisen einen Boden auf, der den Ladeboden für das Aufstellen von zu transportierender Ladung bereithält. Damit sich die Mittelrungen von Planenaufbauten in der Gebrauchsstellung nicht zu sehr entlang des Längsholms hin und her verstellen können, wodurch es zu Beschädigungen an den Mittelrungen oder ganz allgemein an dem Planenaufbau selbst kommen kann, sind im Stand der Technik, insbesondere der US 7 578 539 B1, bereits Lösungen mit korrespondierenden Holmarretierungen an der Innenseite des Längsholms und schwenkbaren Rungenarretierung vorgeschlagen worden, die dadurch außer Eingriff gebracht werden können, dass die Mittelrungen beim Öffnen des Planenaufbaus um den zugehörigen Längsholm geschwenkt und vom Boden gelöst werden. Durch ein Schwenken in die Gegenrichtung gelangen die Holmarretierungen und Rungenarretierungen wieder in einen formschlüssigen Eingriff miteinander. Zudem ist es bekannt, dass der Längsholm in der Gebrauchsstellung reibschlüssig in Eingriff mit einer Mittelrunge ist. Dies wird dadurch erreicht, dass der Längsholm in der Gebrauchsstellung mit seinem unteren Rand auf der Mittelrunge aufliegt bzw. die Mittelrunge in der Gebrauchsstellung gegen den unteren Rand des Längsholms drückt. Die beschriebenen Planenaufbauten sind jedoch hinsichtlich eines einfachen Handlings bei geleichzeitig zuverlässiger Arretierung der Mittelrungen in der Gebrauchsstellung als noch nicht zufriedenstellend anzusehen. Dokument EP3293096 A1 offenbart einen Planenaufbau ähnlich dem einleitenden Teil des Anspruchs 1.

Daher liegt der vorliegenden Erfindung die Aufgabe zugrunde, Planenaufbauten der eingangs genannten und zuvor näher beschriebenen Art derart auszugestalten und weiterzubilden, dass ein einfaches Handling bei geleichzeitig zuverlässiger Arretierung der Mittelrungen in der Gebrauchsstellung erreicht werden kann.

Diese Aufgabe ist bei einem Planenaufbau nach dem Oberbegriff des Anspruchs 1 dadurch gelöst, dass der Längsholm abschnittsweise anhebbar und absenkbar ist, sodass die Verbindung zwischen der wenigstens einen Mittelrunge und dem Längsholm zum Verstellen von der Gebrauchsstellung in die Nichtgebrauchsstellung durch ein abschnittsweises Anheben des Längsholms gegenüber der wenigstens einen Mittelrunge ausgebildet ist und/oder die Verbindung zwischen der wenigstens einen Mittelrunge und dem Längsholm zum Verstellen von der Nichtgebrauchsstellung in die Gebrauchsstellung durch ein abschnittsweises Absenken des Längsholms gegenüber der wenigstens einen Mittelrunge ausgebildet ist, dass die wenigstens eine Holmarretierung und/oder die wenigstens eine Rungenarretierung wenigstens eine Führungsfläche zum Positionieren der wenigstens einen Holmarretierung gegenüber der wenigstens einen Rungenarretierung beim Verstellen von der Nichtgebrauchsstellung in die Gebrauchsstellung aufweist und dass die wenigstens eine Führungsfläche in der Längsrichtung des Längsholms geneigt ist.

Es wird erfindungsgemäß also beispielsweise primär der Längsholm und nicht in erster Linie die Mittelrunge verstellt, um die Verbindung zwischen der wenigstens einen Mittelrunge und dem zugehörigen Längsholm von der Gebrauchsstellung in die Nichtgebrauchsstellung und zurück zu verstellen. Bedarfsweise ist überhaupt keine Verstellung der Mittelrunge erforderlich, was das Handling weiter vereinfacht. Die Gebrauchsstellung wird dabei insbesondere durch ein Absenken des Längsholms erreicht, während die Nichtgebrauchsstellung durch ein Anheben des Längsholms erreicht werden kann. Dabei ist es für das Verstellen in die Gebrauchsstellung und in die Nichtgebrauchsstellung nicht erforderlich, dass der Längsholm über seine gesamte Länge angehoben oder abgesenkt wird. Es reicht aus, wenn dies wenigstens abschnittsweise erfolgt. Besonders bevorzugt ist es dabei, wenn der Längsholm wenigstens im Bereich der wenigstens einen Verbindung zwischen der wenigstens einen Mittelrunge und dem entsprechenden Längsholm angehoben und/oder abgesenkt wird.

Das Handling für das Anheben und/oder das Absenken des Längsholms kann dadurch nennenswert vereinfacht werden, dass der Planenaufbau so ausgebildet wird, dass sich der Längsholm beim Schließen des Planenaufbaus automatisch bzw. zwangsweise absenkt und beim Öffnen des Planenaufbaus automatisch bzw. zwangsweise wieder anhebt. Dabei ist unter dem Öffnen des Planenaufbaus insbesondere das Öffnen der Längsseite zu verstehen, an welcher die wenigstens eine Mittelrunge vorgesehen ist. Dabei kann das Anheben und Absenken beispielsweise durch ein Spannen der zugehörigen Seitenplane erzwungen werden. Die Seitenplanen müssen nämlich vor jeder Fahrt gespannt werden, damit die Seitenplanen nicht unerwünscht im Fahrtwind flattern. Um die entsprechende Seitenplane zum Be- und Entladen öffnen zu können, ist ein vorheriges Entspannen der Seitenplane unabdingbar.

Die Gebrauchsstellung und/oder die Nichtgebrauchsstellung der Verbindung zwischen der wenigstens einen Mittelrunge und dem Längsholm kann alternativ oder zusätzlich zu einem Absenken und/oder einem Anheben des Längsholms auch durch ein abschnittsweises Absenken der wenigstens einen Mittelrunge gegenüber dem Längsholm und/oder durch ein abschnittsweises Anheben der wenigstens einen Mittelrunge gegenüber dem Längsholm erreicht werden. Unabhängig davon muss die relative Verstellung der wenigstens einen Mittelrunge gegenüber dem Längsholm nicht in Bezug auf die gesamte Mittelrunge als solches erfolgen. Dies ist insbesondere der Fall, wenn die wenigstens eine Mittelrunge auch in der Nichtgebrauchsstellung vollständig von dem Längsholm getrennt ist oder getrennt werden soll. Dann bleiben Teile der wenigstens einen Mittelrunge auch in der Nichtgebrauchsstellung mit dem Längsholm verbunden. Allerdings kann diese Verbindung auf unterschiedliche Weisen erfolgen und mehr oder weniger durch das Verstellen der Verbindung zwischen der Gebrauchsstellung und der Nichtgebrauchsstellung beeinflusst sein oder nicht.

Um die wenigstens eine Mittelrunge gegenüber dem Längsholm abzusenken oder anzuheben, ohne dass dies zwingend primär durch eine Höhenverstellung des Längsholms bewirkt werden müsste, kann ein Abschnitt der Runge gegenüber einem anderen Abschnitt der Runge in seiner Höhe verstellbar ausgebildet sein. Alternativ zu einer entsprechenden Verstellung der wenigstens einen Mittelrunge kommt auch ein Schwenken der wenigstens einen Mittelrunge in Betracht, bei dem es nicht zwingend erforderlich ist, dass zwei Abschnitte der wenigstens einen Mittelrunge gegeneinander in ihrer Höhe verstellt werden. Beispielsweise kann die Mittelrunge zur Seite geschwenkt werden, so dass sich die Mittelrunge nicht mehr oder nicht mehr wie in der Gebrauchsstellung gegenüber dem Boden abstützt. Die Mittelrunge kann dementsprechend in der geschwenkten Stellung nach unten absacken und sich so wenigstens bereichsweise gegenüber dem Längsholm absenken. Beim Zurückschwenken der wenigstens einen Mittelrunge kann die Mittelrunge dann wieder bereichsweise und somit gegenüber dem Längsholm angehoben werden, so dass sich beispielsweise die wenigstens eine Mittelrunge wieder gegenüber dem Boden abstützt.

Ein wenigstens bereichsweises Schwenken der wenigstens einen Mittelrunge kann auch mit einer mehrteiligen Ausgestaltung der wenigstens einen Mittelrunge einhergehen. So kann die wenigstens eine Mittelrunge beispielsweise um eine wenigstens im Wesentlichen parallel zum Boden und wenigstens im Wesentlichen parallel zum zugehörigen Längsholm ausgerichtete Knickachse geknickt werden. Die mit dem Knicken einhergehende Verkürzung der wenigstens einen Mittelrunge in ihrer vertikalen Erstreckung kann genutzt werden, um ein Absacken wenigstens eines oberen Teils der wenigstens einen Mittelrunge und damit ein Absenken des oberen Teils der wenigstens einen Mittelrunge gegenüber dem Längsholm zu bewirken.

Das auf die beschriebene oder andere Weise ermöglichte Anheben und/oder Absenken der wenigstens einen Mittelrunge gegenüber dem Längsholm kann bedarfsweise zur weiteren Vereinfachung des Handlings durch entsprechende Mittel gezielt blockiert oder freigegeben werden, so dass sich während der Fahrt des Nutzfahrzeugs, also in der Gebrauchsstellung, die wenigstens eine Mittelrunge nicht versehentlich so verstellt, dass die Verbindung zwischen der wenigstens einen Mittelrunge und dem Längsholm in die Nichtgebrauchsstellung gelangt. Gleichwohl kann sich die wenigstens eine Mittelrunge dann aber zum Be- und/oder Entladen gezielt so verstellen lassen, dass die Verbindung zwischen der wenigstens einen Mittelrunge und dem Längsholm in die Nichtgebrauchsstellung gelangt. In diesem Zusammenhang ist es zur weiteren Vereinfachung des Handlings grundsätzlich zweckmäßig, wenn hierzu eine entsprechende Einrichtung wie beispielsweise ein Hebel, ein Griff, ein Seilzug und/oder ein Drehknauf an der wenigstens einen Mittelrunge vorgesehen ist.

Da dieses wenigstens bereichsweise Anheben und Absenken des Längsholms gegenüber der wenigstens einen Mittelrunge und/oder dieses wenigstens bereichsweise Anheben und Absenken der wenigstens einen Mittelrunge gegenüber dem Längsholm trotzdem eine Arretierung der wenigstens einen Mittelrunge an der Innenseite und/oder an der Außenseite des Längsholms ermöglicht, kann hier ein umfangreiches, breites und/oder weites Ineinandergreifen von Rungenarretierung und Holmarretierung erreicht werden. So lässt sich ein ausgeprägter Formschluss zwischen Rungenarretierung und Holmarretierung erreichen, die letztlich eine zuverlässige Arretierung der wenigstens einen Mittelrunge entlang des Längsholms sicherstellt. Alternativ oder zusätzlich zu dem beschriebenen Formschluss kann auch ein umfangreicher, breiter und/oder weiter Reibschluss zwischen der Rungenarretierung und der Holmarretierung erreicht werden. Auch dadurch kann eine zuverlässige Arretierung der wenigstens einen Mittelrunge entlang des Längsholms sichergestellt werden. Dabei wird unter dem Begriff des Eingreifens anders als bei dem Formschluss kein makroskopisches Eingreifen von Rungenarretierung und Holmarretierung, sondern ein mikroskopisches Eingreifen von Rungenarretierung und Holmarretierung verstanden. Im Bereich der Oberflächenrauigkeiten von Rungenarretierung und Holmarretierung kommt es nämlich auch bei einem reinen Reibschluss auch zu einem, wenn auch sehr geringfügigen, gegenseitigen Eingreifen von verschiedenen Oberflächenbereichen der in Eingriff stehenden Oberflächen von Rungenarretierung und Holmarretierung. Des Weiteren wird durch dieses zuverlässige, formschlüssige und/oder reibschlüssige Ineinandergreifen von Rungenarretierung und Holmarretierung die sonstige Funktionalität weder des Längsholms noch der Mittelrunge oder des Planenaufbaus als solchen nennenswert eingeschränkt.

Es versteht sich, dass Planenaufbauten typischerweise von zwei Seiten beladen werden können sollen. Mithin ist es bei solchen Planenaufbauten, die an beiden Längsseiten Seitenplanen aufweisen, die in einer Nichtgebrauchsstellung entlang des zugehörigen Längsholms nach vorne oder nach hinten verschoben werden können, zweckmäßig, auch an beiden Längsseiten des Planenaufbaus Verbindungen zwischen Mittelrungen und Längsholmen vorzusehen, die wie zuvor beschrieben durch ein wenigstens abschnittsweises Anheben des Längsholms und/oder durch ein wenigstens abschnittsweises Absenken der wenigstens einen Mittelrunge in eine Nichtgebrauchsstellung gelangen und damit geöffnet werden. Durch ein wenigstens abschnittsweises Absenken des zugehörigen Längsholms und/oder durch ein wenigstens abschnittsweises Anheben der wenigstens einen Mittelrunge gelangen die Verbindungen dann wieder in eine Gebrauchsstellung bzw. werden die Verbindungen wieder geschlossen. Mithin sind bei einem Planenaufbau vorzugsweise an beiden gegenüberliegenden Längsseiten wenigstens eine Holmarretierung und wenigstens eine Rungenarretierung vorgesehen, die zum Schließen einer Verbindung in einer entsprechenden Gebrauchsstellung formschlüssig und/oder reibschlüssig ineinandergreifen können. Wenn dabei alle entsprechenden Verbindungen an einer Längsseite oder gar an allen beiden Längsseiten des Planenaufbaus gleichzeitig geschlossen und/oder geöffnet werden, also von der Nichtgebrauchsstellung in die Gebrauchsstellung und/oder zurück verstellt werden, kann dies zu einem vereinfachten Handling beitragen. Zwingend erforderlich ist dies aber nicht.

Bei einer ersten besonders bevorzugten Ausgestaltung des Planenaufbaus ist wenigstens eine Spanneinrichtung zum Spannen der wenigstens einen Seitenplane in einer wenigstens im Wesentlichen vertikalen Richtung zwischen dem wenigstens einen Längsholm und dem Boden vorgesehen. Über diese wenigstens eine Spanneinrichtung kann die mit dem entsprechenden Längsholm derselben Seite verbundene Seitenplane so gespannt werden, dass sich infolgedessen der Längsholm an der entsprechenden Seite des Planenaufbaus wenigstens abschnittsweise absenkt. Die wenigstens eine Spanneinrichtung und der zugehörige Längsholm sind mithin vorzugsweise so ausgebildet, dass das abschnittsweise Anheben des Längsholms gegenüber der wenigstens einen Mittelrunge durch ein Entspannen der wenigstens einen Seitenplane und ein abschnittsweises Absenken des Längsholms gegenüber der wenigstens einen Mittelrunge durch ein Spannen der wenigstens einen Seitenplane bewirkbar ist. Wird das Anheben und Absenken des entsprechenden Längsholms über das Spannen der zugehörigen Seitenplane mit wenigstens einer zugehörigen Spanneinrichtung bewirkt, dient das einem weiter vereinfachten Handling, da die Seitenplane ohnehin zum Be- und Entladen entspannt bzw. zum Fahren wieder gespannt werden muss.

Besonders zweckmäßig für das Handling des Planenaufbaus und gleichzeitig auch für eine sehr zuverlässige Arretierung der wenigstens einen Mittelrunge ist es, wenn die wenigstens eine Mittelrunge einen Rungenkopf aufweist, der in der Gebrauchsstellung auf der Innenseite und/oder der Außenseite des Längsholms die wenigstens eine Rungenarretierung bereitstellt. Es bedarf dann lediglich einer Vestellung von Rungenkopf und Längsholm, ohne dass diese gänzlich außer Eingriff gelangen müssen. Es reicht eine Höhenverstellung in der Größenordnung aus, dass die Rungenarretierung der wenigstens einen Mittelrunge und die zugehörige Holmarretierung außer Eingriff gelangen. Zudem kann die Arretierung der wenigstens einen Mittelrunge in der Gebrauchsstellung zuverlässiger gestaltet werden, wenn der Längsholm in der Gebrauchsstellung auf dem Rungenkopf aufliegt. Hierdurch kann bedarfsweise ein weiterer Reibschluss oder sogar Formschluss zwischen der wenigstens einen Mittelrunge und dem Längsholm bereitgestellt werden.

Das Verstellen der Mittelrunge entlang des Längsholms kann dadurch vereinfacht werden, dass die wenigstens eine Mittelrunge wenigstens einen am Längsholm gehaltenen Schlitten zum Verschieben der Mittelrunge in wenigstens einer Längsrichtung des Längsholms aufweist. Dabei ist es besonders zweckmäßig, wenn der wenigstens eine Schlitten in beide Längsrichtungen des Längsholms, also vor und zurück verschoben werden kann. Zudem kann der Schlitten unlösbar in oder an dem Längsholm gehalten sein, damit ein versehentliches Trennen des Schlittens vom Längsholm vermieden werden kann. Eine weitere Vereinfachung des Handlings der wenigstens einen Mittelrunge kann erreicht werden, wenn der wenigstens eine Schlitten wenigstens eine Rolle zum Abrollen entlang wenigstens einer Lauffläche des Längsholms aufweist. In der Nichtgebrauchsstellung wird so eine reibungsarme Verstellung der wenigstens einen Mittelrunge möglich, ohne dass dadurch auch die Gefahr einer versehentlichen Verstellung der wenigstens einen Mittelrunge entlang des Längsholms in der Gebrauchsstellung zunimmt.

Um das Anheben und das Absenken des Längsholms gegenüber wenigstens Teilen der wenigstens einen Mittelrunge einfach und zuverlässig zu ermöglichen, ohne dass die wenigstens eine Mittelrunge und der zugehörige Längsholm dabei gänzlich außer Eingriff gelangen, kann die Mittelrunge über wenigstens eine Lasche an den Längsholm angebunden sein. Hierbei bietet es sich an, wenn der wenigstens eine Schlitten der wenigstens einen Mittelrunge wenigstens eine mit dem Rungenkopf verbundene Lasche aufweist und dass die Lasche gegenüber dem Rungenkopf von einer eingeschobenen Stellung in der Gebrauchsstellung in eine ausgezogene Stellung in der Nichtgebrauchsstellung und zurück verstellbar ist. Besonders einfach ist es dabei, wenn der Rungenkopf und die Lasche formschlüssig und unverlierbar aber nicht fest miteinander verbunden sind. Das Anheben und Absenken des Längsholms und/oder der wenigstens einen Mittelrunge kann so einfach und zuverlässig mit einem gleichzeitigen Anheben und Absenken des wenigstens einen Schlittens der wenigstens einen Mittelrunge gegenüber anderer Abschnitte der wenigstens einen Mittelrunge einhergehen. Der Schlitten bleibt dabei weiter über die Lasche mit den übrigen Teilen, insbesondere dem Rungenkopf, der Mittelrunge verbunden, während die Lasche gegenüber der Mittelrunge, insbesondere dem Rungenkopf, von einer eingeschobenen Stellung in eine ausgezogene Stellung und wieder zurück verstellt wird.

Um ein Verkanten der Mittelrunge und/oder der Lasche beim Verstellen der Mittelrunge entlang des Längsholms zu vermeiden, kann es sich anbieten, wenn der wenigstens eine Schlitten zum Verschieben der wenigstens einen Mittelrunge zwei mit dem Rungenkopf verbundene Laschen aufweist. Alternativ oder zusätzlich kann die wenigstens eine Mittelrunge auch zwei Schlitten zum Verschieben der wenigstens einen Mittelrunge aufweisen. Dies erhöht zudem die Führung der Mittelrunge während des Verstellens der Mittelrunge entlang des Längsholms.

Um eine Höhenverstellung des Dachs zu ermöglichen, die über eine reine Verstellung eines Längsholms zwischen der abgesenkten und der angehobenen Stellung zum Schließen oder Öffnen der Arretierung der Verbindung zwischen dem Längsholm und der wenigstens einen Mittelrunge hinausgeht, und/oder um ein Absenken und/oder ein Anheben der wenigstens einen Mittelrunge gegenüber dem Längsholm zu bewirken, so dass die Verbindung zwischen der wenigstens einen Mittelrunge und dem Längsholm in die Gebrauchsstellung und/oder die Nichtgebrauchsstellung zu verstellen, kann die wenigstens eine Mittelrunge eine, bedarfsweise wenigstens in der Gebrauchsstellung, mit dem Boden verbundene Rungenbasis und einen mit dem Längsholm, insbesondere mit dem Rungenkopf, verbundenen Rungenschiebling aufweisen. Auf diese Weise kann das Dach beispielsweise zum Be- und Entladen angehoben werden, insbesondere wenn die Ladung sehr hoch ist. Die Höhenverstellung des Dachs kann aber auch dazu dienen, das Dach in unterschiedlichen Fahrstellungen zu positionieren. Dadurch kann der Höhe der Ladung oder den genehmigungsrechtlichen Bestimmungen Rechnung getragen werden. Die Unterteilung der wenigstens einen Mittelrunge wenigstens in einen Rungenschiebling und eine Rungenbasis kann alternativ oder zusätzlich auch zum wenigstens bereichsweisen Absenken und/oder Anheben der wenigstens einen Mittelrunge gegenüber dem Längsholm dienen, um die Verbindung zwischen der wenigstens einen Mittelrunge und dem Längsholm in die Gebrauchsstellung und/oder die Nichtgebrauchsstellung zu verstellen. Zu den genannten Zwecken kann der Rungenschiebling gegenüber der Rungenbasis bevorzugt ausziehbar und wieder einschiebbar vorgesehen sein. Auf diese Weise ist die Höhenverstellung einfach und schnell möglich.

Für ein verbessertes Handling kann es zweckmäßig sein, wenn der Rungenschiebling und die Rungenbasis über eine Feststelleinrichtung miteinander verbunden sind, wobei die Feststelleinrichtung aus einer das Ausziehen und/oder Einschieben des Rungenschieblings gegenüber der Rungenbasis blockierenden Fahrstellung in eine das Ausziehen und/oder das Einschieben des Rungenschieblings gegenüber der Rungenbasis freigebenden Ladestellung und zurück verstellbar ist. In der Fahrstellung befindet sich die Verbindung zwischen der wenigstens einen Mittelrunge und dem Längsholm insbesondere in der Gebrauchsstellung, während sich die Verbindung zwischen der wenigstens einen Mittelrunge und dem Längsholm in der Ladestellung der wenigstens einen Mittelrunge in die Nichtgebrauchsstellung verstellen lässt oder in der Nichtgebrauchsstellung befindet. Die Feststelleinrichtung kann alternativ oder zusätzlich aber auch gezielt ein Schwenken und/oder Knicken der wenigstens einen Mittelrunge blockieren und freigeben. Über die Feststelleinrichtung wird also bedarfsweise ein Verstellen in die Nichtgebrauchsstellung bewusst blockiert oder freigegeben. In einer besonders bevorzugten und sehr zuverlässigen Ausgestaltung ist die Feststelleinrichtung so vorgesehen, dass die Feststelleinrichtung einen in der Fahrstellung formschlüssig in den Rungenschiebling oder die Rungenbasis eingreifenden Hebelmechanismus aufweist. Der Hebelmechanismus der Feststelleinrichtung kann aber insbesondere bei der zum Schwenken und/oder zum Knicken vorgesehenen wenigstens einen Mittelrungen auch formschlüssig in einen Abschnitt der wenigstens einen Mittelrunge eingreifen, der weder ein Rungenschiebling oder eine Rungenbasis ist. Unabhängig von der Art der Verstellung der wenigstens einen Mittelrunge kann es für das Handling besonders zweckmäßig sein, wenn die Feststelleinrichtung einen Kniehebelmechanismus, insbesondere umfassend einen Totpunkt zum selbsttätigen Verriegeln des Kniehebelmechanismus, aufweist.

Damit die Verbindung zwischen dem Längsholm und der wenigstens einen Mittelrunge über die Holmarretierung und die Rungenarretierung zuverlässig in einer vorbestimmten Position und Ausrichtung der Mittelrunge gegenüber dem Längsholm gefügt werden kann, ohne dass es hierzu bestimmter Maßnahmen des Bedieners bedarf, weist die wenigstens eine Holmarretierung und/oder die wenigstens eine Rungenarretierung wenigstens eine Führungsfläche zum Positionieren der wenigstens einen Holmarretierung gegenüber der wenigstens einen Rungenarretierung beim Verstellen von der Nichtgebrauchsstellung in die Gebrauchsstellung auf. An der entsprechenden Führungsfläche der Holmarretierung kann dann die Rungenarretierung abgleiten, so dass die Rungenarretierung und die Holmarretierung in vorbestimmter Weise gegeneinander ausgerichtet sind. Alternativ oder zusätzlich kann aber auch die Holmarretierung an einer Führungsfläche der Rungenarretierung abgleiten, um die Holmarretierung und die Rungenarretierung gegeneinander auszurichten. Diese Ausrichtung funktioniert noch präziser und bedarfsweise in einander gegenüberliegenden Richtungen, wenn die Rungenarretierung oder die Holmarretierung zwei Führungsflächen zum Positionieren der wenigstens einen Holmarretierung gegenüber der wenigstens einen Rungenarretierung beim Verstellen von der Nichtgebrauchsstellung in die Gebrauchsstellung aufweisen.

Da die Rungenarretierung und die Holmarretierung in wenigstens einer Längsrichtung gegeneinander ausgerichtet werden sollen, ist die wenigstens eine Führungsfläche in der Längsrichtung des Längsholms geneigt. Die Führungsfläche kann zusätzlich auch quer zur Längsrichtung des Längsholms geneigt sein, etwa um auch eine Ausrichtung der Rungenarretierung und der Holmarretierung gegeneinander in einer Richtung wenigstens im Wesentlichen senkrecht zum Längsholm zu erreichen.

Wenn die wenigstens zwei Führungsflächen der Holmarretierung und/oder der Rungenarretierung jeweils in entgegengesetzte Längsrichtungen des Längsholms geneigt sind, können diese gegenseitig aneinander abgleiten, so dass die Rungenarretierung und die Holmarretierung in entgegengesetzte Längsrichtungen des Längsholms zueinander ausgerichtet werden können. Dabei ist es ganz grundsätzlich und unabhängig von der Anzahl der Führungsflächen an der Rungenarretierung oder der Holmarretierung bevorzugt, wenn immer eine Führungsfläche der Rungenarretierung und eine Führungsfläche der Holmarretierung paarweise aneinander abgleiten, so dass die gegenseitige Position genauer und definierter gefunden werden kann. Die Führungsflächen können dann korrespondierend zueinander ausgebildet und/oder ausgerichtet sein. Alternativ oder zusätzlich kann die Holmarretierung oder die Rungenarretierung eine wenigstens im Wesentlichen V-förmige Aufnahme bilden. Wenn die korrespondierend ausgebildete Rungenarretierung oder Holmarretierung dann einen wenigstens im Wesentlichen V-förmigen Vorsprung aufweist, wird in der Gebrauchsstellung zuverlässig eine sehr exakte gegenseitige Position der Rungenarretierung und der Holmarretierung erreicht.

Damit die Mittelrunge in der Gebrauchsstellung auch in einer Richtung quer zum Längsholm arretiert werden kann, bietet es sich an, wenn die wenigstens eine Mittelrunge, insbesondere der Rungenkopf der wenigstens einen Mittelrunge, ein Verbindungsmittel zum Eingreifen in einen Spalt des Längsholms aufweist. In diesem Spalt kann es dann zu einem Formschluss zwischen dem Längsholm und dem Verbindungsmittel kommen. Besonders einfach und zweckmäßig ist diese Verbindung, wenn sich der Spalt in der Längsrichtung des Längsholms zwischen zwei parallelen Laufflächen des Längsholms erstreckt. Dann ist in unterschiedlichen Positionen der Mittelrunge ein Eingreifen in den Spalt möglich, ohne dass dies einen erhöhten Platzbedarf erfordern würde.

Konstruktiv einfach aber gleichzeitig sehr funktional ist es dabei, wenn das wenigstens eine Verbindungsmittel in Form eines Stifts oder in Form einer Rippe ausgebildet ist. Ein Stift oder eine Rippe ist leicht und präzise in den Spalt einzuführen, wobei die Rippe einen besseren Formschluss in länglichen Spalten ermöglicht. Alternativ oder zusätzlich kann das Verbindungsmittel zum Abgleiten am Längsholm beim Verstellen in die Gebrauchsstellung wenigstens abschnittsweise in einer Richtung parallel zum Längsholm abgeschrägt sein. So wird eine Gleitfläche geschaffen, entlang derer das Verbindungsmittel am Längsholm abgleiten kann, um so zuverlässig seine vorbestimmte Position zu finden.

Um das Eingreifen des Verbindungsmittels in den Längsholm konstruktiv zu vereinfachen ohne das Verschieben der Mittelrunge zu beeinträchtigen, kann das wenigstens eine Verbindungsmittel zwischen zwei Schlitten zum Verschieben der wenigstens einen Mittelrunge vorgesehen sein. Die beiden Schlitten dienen einem geeigneten Verschieben der Mittelrunge und schaffen dazwischen bedarfsweise Platz für das Eingreifen des Verbindungsmittels in den Längsholm.

Wenn der Längsholm eine Aufnahme für wenigstens einen mit der Seitenplane verbundenen Schlitten aufweist, kann die Seitenplane einfach und zuverlässig entlang des Längsholms verstellt werden. Dies gilt insbesondere dann, wenn die Aufnahme für den wenigstens einen Schlitten der Seitenplane wenigstens eine Lauffläche zum Abrollen wenigstens einer Rolle des wenigstens einen Schlittens der Seitenplane aufweist. So ist das Verschieben der Seitenplane ohne großen Kraftaufwand möglich.

Um das Handling der Seitenplane zu verbessern und die wenigstens eine Mittelrunge zu schützen, ist die Aufnahme für den wenigstens einen Schlitten der Seitenplane zweckmäßigerweise oberhalb einer Aufnahme für den wenigstens einen Schlitten der wenigstens einen Mittelrunge vorgesehen.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau in einer perspektivischen Ansicht,
- Fig. 2A-B: ein Detail des Planenaufbaus aus Fig. 1 im Bereich eines Längsholms und einer Mittelrunge in einer Gebrauchsstellung und einer Nichtgebrauchsstellung jeweils in einem Querschnitt gemäß der Schnittebene IIA-IIA,
- Fig. 3A-B: das Detail des Planenaufbaus aus Fig. 2 in einer Gebrauchsstellung und einer Nichtgebrauchsstellung jeweils in einer Seitenansicht und
- Fig. 4A-B: das Detail des Planenaufbaus aus Fig. 2 in einer Gebrauchsstellung und einer Nichtgebrauchsstellung jeweils in einem Längsschnitt.

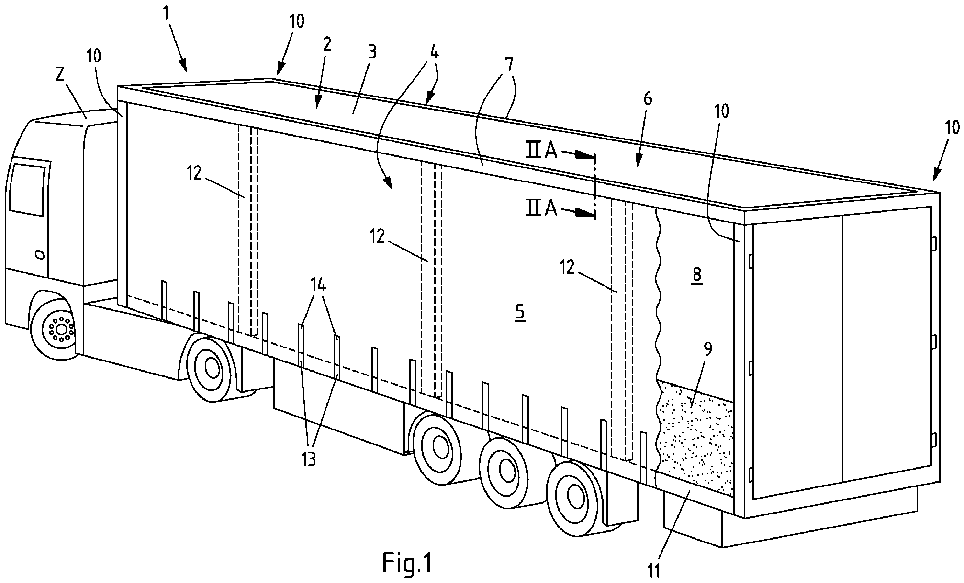

In der Fig. 1 ist ein von einer Zugmaschine Z gezogenes Nutzfahrzeug N in Form eines Sattelaufliegers dargestellt. Das Nutzfahrzeug N weist einen Planenaufbau 1 in Form eines Curtainsider-Aufbaus auf. Der Planenaufbau 1 weist eine das Dach 2 verschließende Dachplane 3 und jeweils eine eine Längsseite 4 verschließende Seitenplane 5 auf. Die Dachplane 3 ist dabei Teil eines Schiebeverdecks 6, welches zum Öffnen des Dachs 2 zum Be- und/oder Entladen des Planenaufbaus 1 nach vorne geschoben werden kann. Dazu ist das Schiebeverdeck 6 mit Laufrollen aufweisenden Schlitten an Längsholmen 7 derart gehalten, dass die Laufrollen entlang von Planenlaufflächen der Längsholme 7 in Längsrichtung der Längsholme 7 abrollen können, um das Schiebeverdeck 6 nach vorne und wieder zurück nach hinten schieben zu können.

An den Längsholmen 7 sind zudem die Seitenplanen 5 gehalten. Die Seitenplanen 5 können in der Längsrichtung des Planenaufbaus 1 nach vorne und nach hinten verschoben werden. Durch das Verschieben der Seitenplanen 5 in der Längsrichtung der Längsholme 7 können die Längsseiten 4 des Planenaufbaus 1 zum Be- und/oder Entladen unter Freigabe des Laderaums 8 sowie des Ladebodens 9 des Planenaufbaus 1 geöffnet und vor der Fahrt des Nutzfahrzeugs N wieder geschlossen werden.

Der Planenaufbau 1 weist an den umlaufenden vier vertikalen Kanten Eckrungen 10 auf, die einerseits mit dem den Ladeboden 9 tragenden Boden 11 des Planenaufbaus 1 verbunden sind und andererseits das Dach 2 bzw. die Längsholme 7 des Dachs 2 stützen. Zwischen den Eckrungen 10 sind an den Längsseiten 4 Mittelrungen 12 vorgesehen, die im Gegensatz zu den Eckrungen 10 bedarfsweise aber nicht zwingend in einer Nichtgebrauchsstellung während des Be- und Entladens des Planenaufbaus von dem Boden 11 des Planenaufbaus 1 entfernt werden können, um die Zugänglichkeit des Laderaums 8 zum Be- und/oder Entladen zu verbessern. Während des Transports der Ladung ist der Planenaufbau 1 geschlossen und sind die Mittelrungen in einer Gebrauchsstellung angeordnet, in der die Mittelrungen das Dach 2 gegenüber dem Boden 11 abstützen.

Die Seitenplanen 5 können mit bekannten aber nicht im Einzelnen dargestellten Planenspannrohren an den Eckrungen 10 festgelegt sein, um die Seitenplanen 5 in der Längsrichtung des Planenaufbaus 1 bzw. der Längsrichtung des jeweiligen Längsholms 7 gespannt zu werden. An den unteren Rändern der Seitenplanen 5 sind Haken 13 vorgesehen, mit denen die Seitenplanen 5 am Boden 11 des Planenaufbaus 1 eingehakt werden können. Den Haken 13 und den Seitenplanen 5 sind zudem Spanneinrichtungen 14 etwa in Form von Ratschen zugeordnet, über die die jeweils zugeordnete Seitenplane 5 über ihre Breite, also wenigstens im Wesentlichen in vertikaler Richtung, gespannt werden kann. Dabei sind die Längsholme 7 so flexibel an den Eckrungen 10 festgelegt und/oder ausgebildet, dass sich die Längsholme 7 beim Spannen der Seitenplanen 5 über deren Breite wenigstens abschnittsweise absenken. Durch das Absenken der Längsholme 7 wird die Verbindung zwischen den Längsholmen 7 und den jeweils zugeordneten Mittelrungen 12 in die Gebrauchsstellung verstellt, in der ein versehentliches bzw. unerwünschtes Verschieben der Mittelrungen 12 in Längsrichtung der Längsholme 7 verhindert wird. Wird die Spannung der Seitenplane 5 in der vertikalen Richtung dagegen wieder gelöst, hebt sich der zugeordnete Längsholm 7 wenigstens abschnittsweise wieder an und gelangt die Verbindung zwischen dem Längsholm 7 und den zugehörigen Mittelrungen 12 in die Nichtgebrauchsstellung. In der Nichtgebrauchsstellung können die Mittelrungen 12 ohne Weiteres entlang der zugehörigen Längsholme 7 nach vorne und nach hinten verschoben werden, um die Längsseiten für das Be- und Entladen freizugeben.

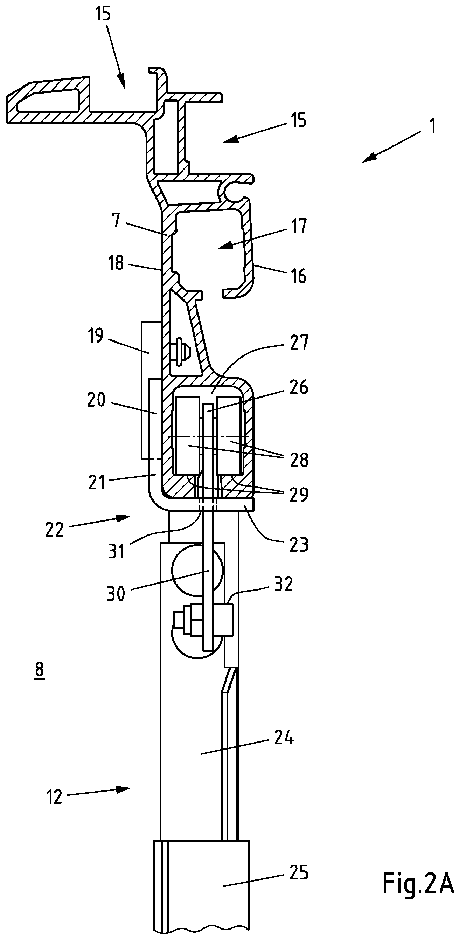

In der Fig. 2A ist ein Querschnitt durch den Planenaufbau 1 im Bereich eines Längsholms 7 und einer Mittelrunge 12 dargestellt, wobei sich die Verbindung zwischen dem Längsholm 7 und der Mittelrunge 12 in der Gebrauchsstellung befindet. Der besseren Übersichtlichkeit halber ist das Dach 2 mit der Dachplane 3 und den entlang des Längsholms 7 verschiebbaren, die Dachplane 3 tragenden Spriegeln weggelassen worden. Die Spriegel sind über ebenfalls nicht dargestellte Schlitten in sich in der Längsrichtung des Längsholms 7 erstreckenden Aufnahmen 15 gehalten, entlang derer die Schlitten der Spriegel mittels entsprechender Rollen längs zum Längsholm 7 verfahren werden können. An der vom Laderaum 8 wegweisenden Außenseite 16 des Längsholms 7 ist eine weitere Aufnahme 17 vorgesehen, in der nicht dargestellte, mit der Seitenplane 5 verbundene Schlitten aufgenommen sind. Diese Schlitten weisen ebenfalls Rollen auf, mit denen die Schlitten reibungsarm entlang der Aufnahmen 17 nach vorne und nach hinten geschoben werden können, um die Seitenplanen 5 zu öffnen und wieder zu schließen.

An der dem Laderaum 8 zugewandten Innenseite 18 des Längsholms 7 ist ferner eine Holmarretierung 19 vorgesehen. Die Holmarretierung 19 ist dabei als Metallteil ausgebildet, das von innen am Längsholm 7 festgelegt ist, und zwar insbesondere durch Nieten. Die Holmarretierung 19 greift in der Längsrichtung des Längsholms 7 formschlüssig in eine Rungenarretierung 20 und verhindert so ein Verschieben der Mittelrunge 12 entlang des Längsholms 7. Alternativ oder zusätzlich wäre hier aber auch ein reibschlüssiges Eingreifen von Rungenarretierung und Holmarretierung denkbar, etwa indem korrespondierende Oberflächen von Rungenarretierung und Holmarretierung in reibschlüssige Anlage aneinander gelangen. Die entsprechenden Oberflächen von Rungenarretierung und Holmarretierung wären beim vorliegenden Ausführungsbeispiel zur Bildung eines reinen Reibschlusses vorzugsweise jeweils wenigstens im Wesentlichen parallel zueinander und parallel zu dem zugehörigen Längsholm, dem Boden und/oder dem Dach ausgerichtet.

Die Rungenarretierung 20 ist an einem seitlich nach oben abkragenden Schenkel 21 eines Rungenkopfes 22 der Mittelrunge 12 vorgesehen. In der in der Fig. 2A dargestellten Gebrauchsstellung sitzt der Längsholm 7 mit einer Unterseite auf dem unter dem Längsholm 7 angeordneten Schenkel 23 des Rungenkopfes 22 reibschlüssig auf. Der Rungenkopf 22 wird von einem Rungenschiebling 24 getragen, der gegenüber einer Rungenbasis 25 nach oben ausziehbar und wieder nach unten einschiebbar an der Rungenbasis 25 gehalten ist. Der Rungenschiebling 24 ist dabei in unterschiedlichen Stellungen an der Rungenbasis 25 arretierbar gehalten, wobei sich die Rungenbasis 25 gegenüber dem Boden 11 abstützt. Die Mittelrunge 12 weist mit dem Rungenkopf 22 verbundene Schlitten 26 auf, die in einer sich längs zum Längsholm 7 erstreckenden Aufnahme 27 verschoben werden können, wenn sich die Verbindung zwischen dem Längsholm 7 und der Mittelrunge 12 in der Nichtgebrauchsstellung und nicht in der in der Fig. 2A dargestellten Gebrauchsstellung befindet. Hierzu weisen die Schlitten 26 Rollen 28 auf, die auf entsprechenden Laufflächen 29 des Längsholms 7 abrollen können, wenn die Mittelrungen 12 nach vorne oder nach hinten verschoben werden. Die Verbindung zwischen dem Schlitten 26 und dem Rungenkopf 22 ist nicht fest aber formschlüssig unverlierbar über Laschen 30 ausgebildet, die von oben durch Öffnungen 31 im Rungenkopf 22 geführt sind. Die dargestellten Laschen 30 weisen zudem untere Anschläge 32 auf, die ein vollständiges Ausziehen der Laschen 30 gegenüber dem Rungenkopf 22 verhindern sollen.

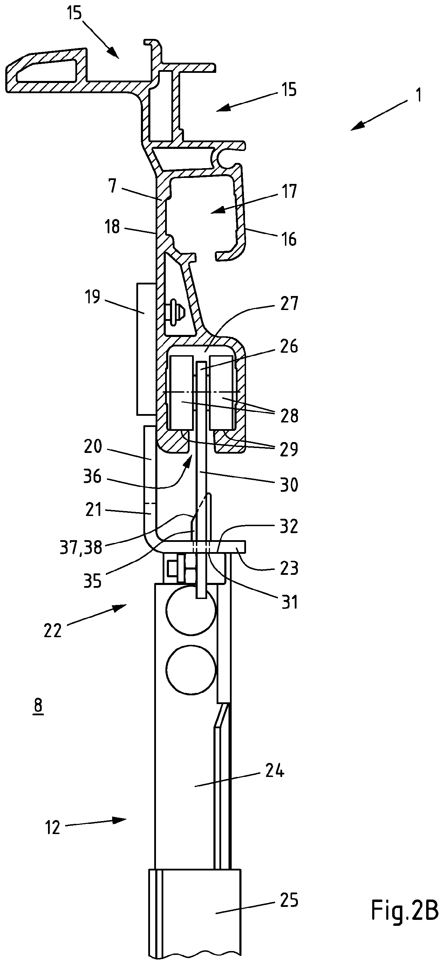

In der Fig. 2B ist dasselbe Detail des Planenaufbaus 1 wie in der Fig. 2A dargestellt, jedoch mit dem Unterschied, dass sich die Verbindung zwischen dem Längsholm 7 und der Mittelrunge 12 in der Nichtgebrauchsstellung befindet. Aus der Gebrauchsstellung ist diese Verbindung durch ein Entspannen der zugehörigen Seitenplane 5 entlang ihrer Breite bzw. in vertikaler Richtung in die Nichtgebrauchsstellung gelangt. Das Entspannen wird bei dem dargestellten und insoweit bevorzugten Planenaufbau 1 dadurch bewirkt, dass die Spanneinrichtungen 14 am unteren Rand der Seitenplane 5 gelockert werden. Dadurch wird der Zug, der von der Seitenplane 5 auf den zugehörigen Längsholm 7 nach unten ausgeübt wird und den Längsholm 7 wenigstens in den Bereichen der Verbindungen mit den Mittelrungen 12 nach unten auf die entsprechenden Rungenköpfe 22 absenkt, aufgehoben. Als Folge davon wird der Längsholm 7 wenigstens abschnittsweise angehoben. Zusammen mit dem Längsholm 7 werden auch die im Längsholm 7 gehaltenen Schlitten 26 angehoben. Der Rungenkopf 22 bleibt jedoch bedarfsweise in derselben Stellung wie in der Gebrauchsstellung. Dementsprechend werden die Laschen 30 der Schlitten 26 teilweise aus den zugehörigen Öffnungen 31 des Rungenkopfes 22 herausgezogen.

Da der Rungenkopf 22 in der Gebrauchsstellung und der Nichtgebrauchsstellung wenigstens im Wesentlichen unverändert angeordnet bleibt, gelangen in der Nichtgebrauchsstellung die Rungenarretierung 20 und die Holmarretierung 19 in der vertikalen Richtung außer Eingriff. Die Mittelrunge 12 kann nun in der Längsrichtung des Längsholms 7 verschoben werden. Dabei rollen die Schlitten 26 der Mittelrunge 12 über die zugehörigen Rollen 28 an den Laufflächen 29 des Längsholms 7 ab. Anschließend können die Mittelrungen 12 wieder in ihre vorherige Position verfahren werden. Sodann kann die Seitenplane 5 geschlossen und in der Richtung ihrer Breite, also wenigstens im Wesentlichen in der vertikalen Richtung, gespannt werden. Dadurch wird der Längsholm 7 abgesenkt und gelangt die Verbindung zwischen den Mittelrungen 12 und dem Längsholm 7 wieder in die Gebrauchsstellung.

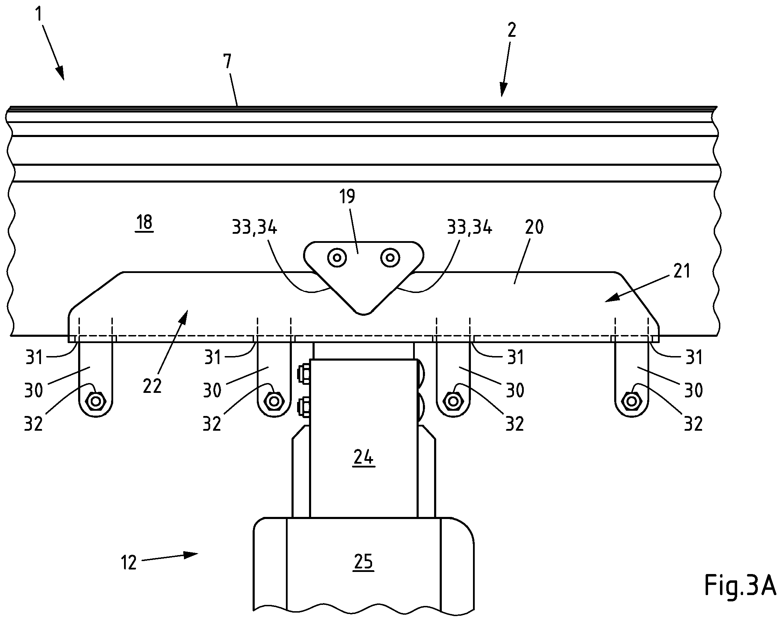

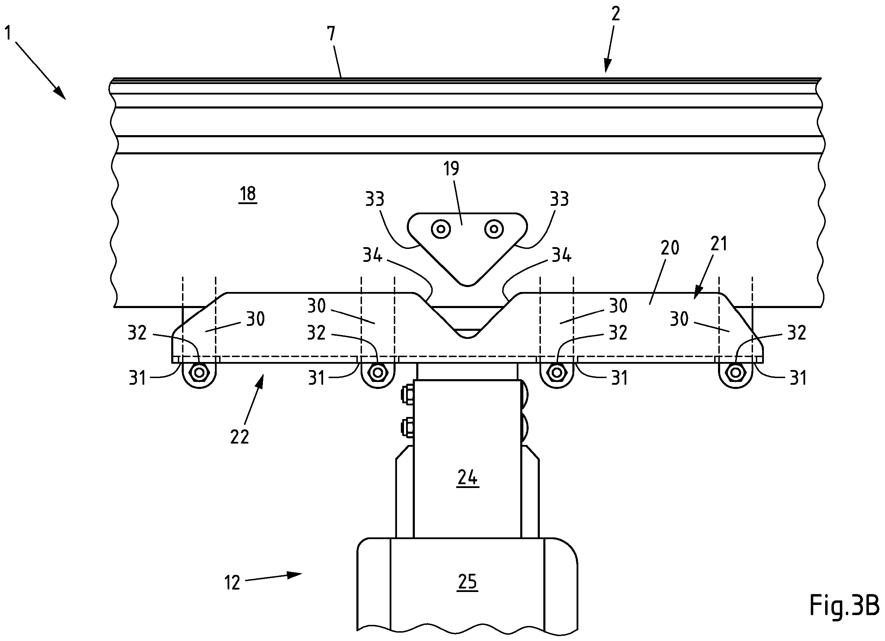

In den Fig. 3A-B ist das Detail der Fig. 2A-B in einer Seitenansicht vom Laderaum 8 aus dargestellt und zwar wieder einmal in der Gebrauchsstellung und einmal in der Nichtgebrauchsstellung der Verbindung zwischen dem Längsholm 7 und der Mittelrunge 12. Die Holmarretierung 19 dieser Verbindung weist dabei wenigstens teilweise zu gegenüberliegenden Längsseiten des Längsholms 7 weisende Führungsflächen 33 auf, so dass beim Absenken des Längsholms 7 sich die Rungenarretierung 20 und die Holmarretierung 19 wie vorbestimmt längs zum Längsholm 7 gegeneinander ausrichten. Da die beiden Führungsflächen 33 der Holmarretierung 19 wenigstens teilweise in gegenüberliegende Längsrichtungen bezogen auf den Längsholm 7 weisen, erfolgt die Ausrichtung der Holmarretierung 19 und der Rungenarretierung 20 in beiden Längsrichtungen des Längsholms 7. Damit die Ausrichtung von Holmarretierung 19 und Rungenarretierung 20 sehr zuverlässig und störungsfrei erfolgt, weisen die Holmarretierung 19 und die Rungenarretierung 20 zwei Paare korrespondierender Führungsflächen 33,34 auf, die bei dem vorliegenden Ausführungsbeispiel wenigstens im Wesentlichen jeweils für sich dieselben Neigungen gegenüber der Längserstreckung des Längsholms 7 aufweisen. Mithin weist also auch die Rungenarretierung 20 zwei Führungsflächen 34 auf, die wenigstens teilweise in gegenüberliegende Längsrichtungen des Längsholms 7 weisen. Der Einfachheit halber ist die Holmarretierung 19 etwa V-förmig ausgebildet und weist die Rungenarretierung 20 eine etwa V-förmige Nut auf, in die die V-förmige Holmarretierung 19 eingreift. Eine entsprechende Umkehr der Ausgestaltung der Rungenarretierung 20 und der Holmarretierung 19 wäre aber ebenso denkbar. So ist in der Gebrauchsstellung der Fig. 3A kein Verschieben der Mittelrunge 12 in der Längsrichtung des Längsholms 7 möglich. Ein Verschieben der Mittelrunge in Richtung der Außenseite 16 des Längsholms 7 ist dadurch begrenzt, dass der Rungenkopf 22 den Längsholm 7 auf dessen Innenseite 18 formschlüssig umgreift. Dies ist auch in der Nichtgebrauchsstellung der Fig. 3B der Fall, jedoch sind dann durch das hinreichende Anheben des Längsholms 7 die Holmarretierung 19 und die Rungenarretierung 20 in Längsrichtung des Längsholms 7 außer Eingriff.

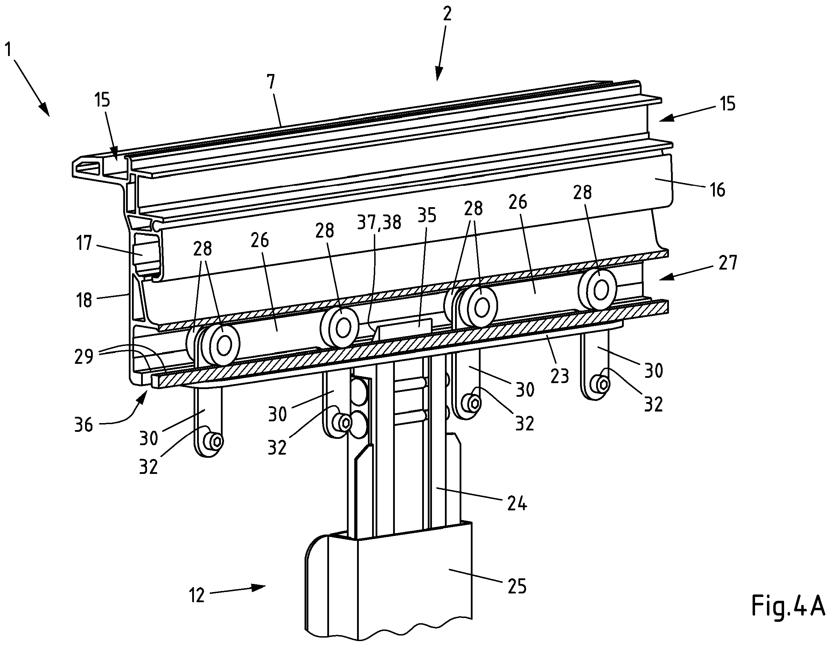

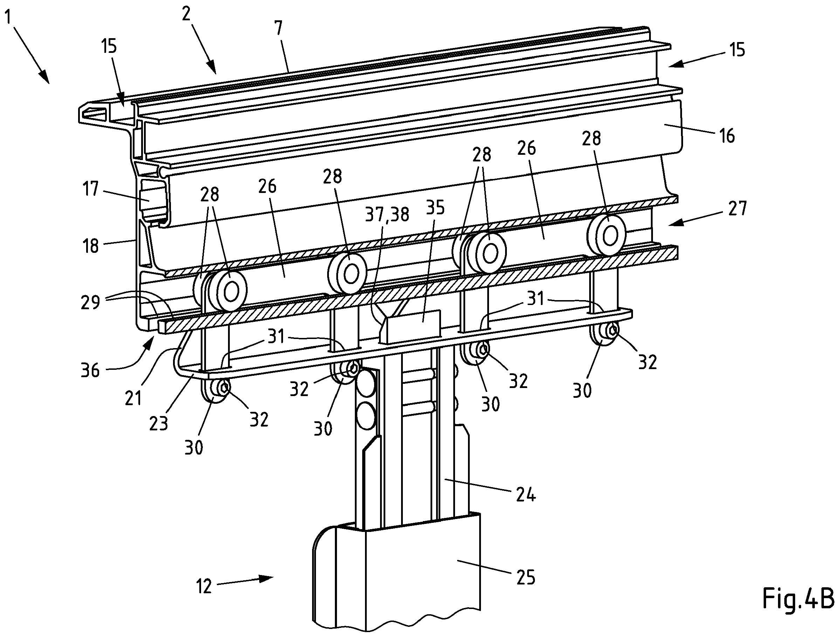

In der Fig. 4A-B ist das Detail der Fig. 2A-B in einem Längsschnitt von der Außenseite 16 des Längsholms 7 aus dargestellt und zwar wieder einmal in der Gebrauchsstellung und einmal in der Nichtgebrauchsstellung der Verbindung zwischen dem Längsholm 7 und der Mittelrunge 12. Die beiden Schlitten 26 sind in der Aufnahme 27 des Längsholms 7 in einem gewissen Abstand vorgesehen. Die beiden Rollenpaare der beiden Schlitten 26 rollen alle auf denselben beiden Laufflächen 29 am unteren Rand der Aufnahme 27 ab, jedenfalls in der Nichtgebrauchsstellung. In der Nichtgebrauchsstellung sind die Schlitten 26 zusammen mit dem Längsholm 7 und den Laschen 30 gegenüber dem Rungenkopf 22 angehoben, wobei die Laschen 30 durch die zugehörigen Öffnungen 31 im Rungenkopf 22 nach oben ausgezogen sind. Zwischen den beiden Schlitten 26 ist am Rungenkopf 22 ein Verbindungsmittel 35 in Form einer Rippe vorgesehen, die in der Gebrauchsstellung in einen Längsspalt 36 des Längsholms 7 zwischen den beiden Laufflächen 29 der Aufnahme 27 für die Schlitten 26 der Mittelrunge 12 und zwischen die beiden Schlitten 26 der Mittelrunge 12 eingreift. Durch dieses Eingreifen beim Absenken des Längsholms 7 in die Gebrauchsstellung wird der Rungenkopf 22 in einer Richtung quer zum Längsholm 7 positioniert und wird der Rungenkopf 22 in der Gebrauchsstellung formschlüssig quer zum Längsholm 7 gehalten. Damit das Eingreifen des Verbindungsmittels 35 in den Längsspalt 36 zuverlässig erfolgt und kein Blockieren beim Verstellen des Längsholms 7 von der Nichtgebrauchsstellung in die Gebrauchsstellung auftritt, ist an dem Verbindungsmittel 35 quer zum Längsholm 7 ausgerichtet eine Abschrägung 37 vorgesehen. Diese Abschrägung 37 bildet eine abgeschrägte Gleitfläche 38, die an dem Längsspalt 36 des Längsholms 7 zwischen den Laufflächen 29 abgleiten kann, wenn der Längsholm 7 gegenüber dem Rungenkopf 22 absenkt.

Bei einer nicht dargestellten alternativen Ausführungsform eines Planenaufbaus kann alternativ oder zusätzlich zu der Verstellung der Verbindung zwischen der wenigstens einen Mittelunge mit dem Längsholm von der Gebrauchsstellung in die Nichtgebrauchsstellung und zurück durch das Anheben und das erneute Absenken des Längsholms diese Verstellung beispielsweise durch ein Verschieben eines Rungenschieblings und/oder Rungenkopfes gegenüber einer Rungenbasis nach unten und wieder nach oben beispielsweise durch ein Schwenken der wenigstens einen Mittelrunge gegenüber dem Längsholm zur Seite und wieder zurück und/oder beispielsweise durch ein Knicken und wieder Aufrichten der wenigstens einen Mittelrunge bewirkt werden. Auch bei diesen alternativen Möglichkeiten der Verstellung der Verbindung zwischen der wenigstens einen Mittelrunge und dem Längsholm kommt es bevorzugt zu einem Absacken der Mittelrunge, des Rungenschieblings und/oder des Rungenkopfs gegenüber dem Längsholm, was, wie in der Zeichnung dargestellt ist, über die Verbindung wenigstens eines Schlittens über wenigstens eine Lasche mit dem Rungenkopf ermöglicht werden kann. Mithin sind die Zeichnung und die zugehörige Beschreibung auch unmittelbar auf die zuvor beschriebenen aber nicht explizit dargestellten alternativen Möglichkeiten des Verstellens der Verbindung zwischen der wenigstens einen Mittelrunge und dem Längsholm anzuwenden oder wenigstens sinngemäß zu übertragen.

### Bezugszeichenliste

- 1: Planenaufbau
- 2: Dach
- 3: Dachplane
- 4: Längsseite
- 5: Seitenplane
- 6: Schiebeverdeck
- 7: Längsholm
- 8: Laderaum
- 9: Ladeboden
- 10: Eckrunge
- 11: Boden
- 12: Mittelrunge
- 13: Haken
- 14: Spanneinrichtung
- 15: Aufnahmen
- 16: Außenseite
- 17: Aufnahme
- 18: Innenseite
- 19: Holmarretierung
- 20: Rungenarretierung
- 21: Schenkel
- 22: Rungenkopf
- 23: Schenkel
- 24: Rungenschiebling
- 25: Rungenbasis
- 26: Schlitten
- 27: Aufnahme
- 28: Rolle
- 29: Lauffläche
- 30: Laschen
- 31: Öffnung
- 32: Anschlag
- 33: Führungsfläche
- 34: Führungsfläche
- 35: Verbindungsmittel
- 36: Längsspalt
- 37: Abschrägung
- 38: Gleitfläche
- N: Nutzfahrzeug
- Z: Zugmaschine

## Patentansprüche

1. Planenaufbau (1) eines Nutzfahrzeugs, insbesondere eines Lastkraftwagens, Anhängers oder Sattelaufliegers, mit einem Boden (11), einem an einer Längsseite (4) des Planenaufbaus (1) vorgesehenen Längsholm (7) eines Dachs (2), wenigstens einer mit dem Längsholm (7) verbundenen Mittelrunge (12) und wenigstens einer Seitenplane (5) zum Verschließen der Längsseite (4) des Planenaufbaus (1), wobei die Verbindung zwischen der wenigstens einen Mittelrunge (12) und dem Längsholm von einer Gebrauchsstellung zum Abstützen des Dachs (2) gegenüber dem Boden (11) in eine Nichtgebrauchsstellung zum Verschieben der Mittelrunge (12) entlang des Längsholms (7) und zurück verstellbar vorgesehen ist, wobei der Längsholm (7) an einer zum Laderaum (8) hinweisenden Innenseite (18) oder einer vom Laderaum (8) wegweisenden Außenseite (16) wenigstens eine Holmarretierung (19) aufweist, wobei die wenigstens eine Mittelrunge (12) an einer zum Laderaum (8) hinweisenden Innenseite (18) oder einer vom Laderaum (8) wegweisenden Außenseite (16) eine mit der Holmarretierung (19) korrespondierende Rungenarretierung (20) aufweist, wobei wenigstens eine Rungenarretierung (20) und wenigstens eine Holmarretierung (19) in wenigstens einer Längsrichtung des Längsholms (7) in der Gebrauchsstellung formschlüssig und/oder reibschlüssig in Eingriff und in der Nichtgebrauchsstellung außer Eingriff sind,
**dadurch gekennzeichnet,**
- **dass** der Längsholm abschnittsweise anhebbar und absenkbar ist, sodass die Verbindung zwischen der wenigstens einen Mittelrunge (12) und
dem Längsholm (7) zum Verstellen von der Gebrauchsstellung in die Nichtgebrauchsstellung durch ein abschnittsweises Anheben des Längsholms (7) gegenüber der wenigstens einen Mittelrunge (12) ausgebildet ist und/oder die Verbindung zwischen der wenigstens einen Mittelrunge (12) und dem Längsholm (7) zum Verstellen von der Nichtgebrauchsstellung in die Gebrauchsstellung durch ein abschnittsweises Absenken des Längsholms (7) gegenüber der wenigstens einen Mittelrunge (12) ausgebildet ist,
- **dass** die wenigstens eine Holmarretierung (19) und/oder die wenigstens eine Rungenarretierung (20) wenigstens eine Führungsfläche (33,34) zum Positionieren der wenigstens einen Holmarretierung (19) gegenüber der wenigstens einen Rungenarretierung (20) beim Verstellen von der Nichtgebrauchsstellung in die Gebrauchsstellung aufweist und
- **dass** die wenigstens eine Führungsfläche (33,34) in der Längsrichtung des Längsholms (7) geneigt ist.

2. Planenaufbau nach Anspruch 1,
**dadurch gekennzeichnet, dass** wenigstens eine Spanneinrichtung (14) zum Spannen der wenigstens einen Seitenplane (5) in einer wenigstens im Wesentlichen vertikalen Richtung zwischen dem wenigstens einen Längsholm (7) und dem Boden (11) vorgesehen ist und dass, vorzugsweise, die Spanneinrichtung (14) und der wenigstens eine Längsholm (7) derart ausgebildet sind, dass das abschnittsweise Anheben des Längsholms (7) gegenüber der wenigstens einen Mittelrunge (12) durch ein Entspannen der wenigstens einen Seitenplane (5) und ein abschnittsweises Absenken des Längsholms (7) gegenüber der wenigstens einen Mittelrunge (12) durch ein Spannen der wenigstens einen Seitenplane (5) bewirkbar ist.

3. Planenaufbau nach Anspruch 1 oder 2,
**dadurch gekennzeichnet, dass**
die wenigstens eine Mittelrunge (12) einen in der Gebrauchsstellung auf der Innenseite (18) und/oder der Außenseite (16) des Längsholms (7) die wenigstens eine Rungenarretierung (20) bereitstellenden Rungenkopf (22) aufweist und dass, vorzugsweise, der Längsholm (7) in der Gebrauchsstellung auf dem Rungenkopf (22) aufliegt.

4. Planenaufbau nach einem der Ansprüche 1 bis 3,
**dadurch gekennzeichnet, dass**
die wenigstens eine Mittelrunge (12) wenigstens einen am Längsholm (7) gehaltenen Schlitten (26) zum Verschieben der Mittelrunge (12) in wenigstens einer Längsrichtung des Längsholms (7) aufweist und dass, vorzugsweise, der wenigstens eine Schlitten (26) wenigstens eine Rolle (28) zum Abrollen entlang wenigstens einer Lauffläche (29) des Längsholms (7) aufweist.

5. Planenaufbau nach Anspruch 4,
**dadurch gekennzeichnet, dass**
der wenigstens eine Schlitten (26) der wenigstens einen Mittelrunge (12) wenigstens eine mit dem Rungenkopf (22), insbesondere formschlüssig, verbundene Lasche (30) aufweist und dass die Lasche (30) gegenüber dem Rungenkopf (22) von einer eingeschobenen Stellung in der Gebrauchsstellung in eine ausgezogenen Stellung in der Nichtgebrauchsstellung und zurück verstellbar ist.

6. Planenaufbau nach einem der Ansprüche 3 bis 5,
**dadurch gekennzeichnet, dass**
der wenigsten eine Schlitten (26) zum Verschieben der wenigstens einen Mittelrunge (12) zwei mit dem Rungenkopf (22) verbundene Laschen (30) aufweist und/oder dass die wenigstens eine Mittelrunge (12) zwei Schlitten (26) zum Verschieben der wenigstens einen Mittelrunge (12) aufweist.

7. Planenaufbau nach einem der Ansprüche 1 bis 6,
**dadurch gekennzeichnet, dass**
die wenigstens eine Mittelrunge (12) eine wenigstens in der Gebrauchsstellung mit dem Boden (11) verbundene Rungenbasis (25) und einen mit dem Längsholm (7), insbesondere mit dem Rungenkopf (22), verbundenen Rungenschiebling (24) aufweist und dass zum Zwecke einer Höhenverstellung des Dachs (2) und/oder zum Zwecke des Anhebens und/oder Absenkens der wenigstens einen Mittelrunge (12) der Rungenschiebling (24) gegenüber der Rungenbasis (25) ausziehbar und/oder einschiebbar vorgesehen ist.

8. Planenaufbau nach Anspruch 7,
**dadurch gekennzeichnet, dass**
der Rungenschiebling (24) und die Rungenbasis (25) über eine Feststelleinrichtung miteinander verbunden sind, dass die Feststelleinrichtung aus einer das Ausziehen und/oder das Einschieben des Rungenschieblings (24) gegenüber der Rungenbasis (25) blockierenden Fahrstellung in eine das Ausziehen und/oder das Einschieben des Rungenschieblings (24) gegenüber der Rungenbasis (25) freigebende Ladestellung und zurück verstellbar ist und dass, vorzugsweise, die Feststelleinrichtung einen in der Fahrstellung formschlüssig in den Rungenschiebling (24) oder die Rungenbasis (25) eingreifenden Hebelmechanismus und/oder einen Kniehebelmechanismus, insbesondere umfassend einen Totpunkt zum selbsttätigen Verriegeln des Kniehebelmechanismus, aufweist.

9. Planenaufbau nach einem der Ansprüche 1 bis 8,
**dadurch gekennzeichnet, dass**
die wenigstens eine Holmarretierung (19) und/oder die wenigstens eine Rungenarretierung (20) wenigstens zwei Führungsflächen (33,34) zum Positionieren der wenigstens einen Holmarretierung (19) gegenüber der wenigstens einen Rungenarretierung (20) beim Verstellen von der Nichtgebrauchsstellung in die Gebrauchsstellung aufweist und dass die wenigstens zwei Führungsflächen (33,34) in der Längsrichtung des Längsholms (7) geneigt sind.

10. Planenaufbau nach Anspruch 9,
**dadurch gekennzeichnet, dass**
die zwei Führungsflächen (33,34) der Holmarretierung (19) und/oder der Rungenarretierung (20) jeweils in entgegengesetzte Längsrichtungen des Längsholms (7) geneigt sind und/oder dass die Holmarretierung (19) oder die Rungenarretierung (20) eine wenigstens im wesentlichen V-förmige Aufnahme und die Rungenarretierung (20) oder die Holmarretierung (19) einen korrespondierenden, wenigstens im Wesentlichen V-förmigen Vorsprung aufweisen.

11. Planenaufbau nach einem der Ansprüche 1 bis 10,
**dadurch gekennzeichnet, dass**
die wenigstens eine Mittelrunge (12), insbesondere der Rungenkopf (22) der wenigstens einen Mittelrunge (12), ein Verbindungsmittel (35) zum Eingreifen in einen Längsspalt (36) des Längsholms (7) in der Gebrauchsstellung aufweist und dass, vorzugsweise, sich der Längsspalt (36) in der Längsrichtung des Längsholms (7) zwischen zwei parallelen Laufflächen (29) des Längsholms (7) erstreckt.

12. Planenaufbau nach Anspruch 11,
**dadurch gekennzeichnet, dass**
das wenigstens eine Verbindungsmittel (35) in Form eines Stifts oder in Form einer Rippe ausgebildet ist und/oder dass das Verbindungsmittel (35) zum Abgleiten am Längsholm (7) beim Verstellen in die Gebrauchsstellung wenigstens abschnittsweise in einer Richtung parallel zum Längsholm (7) abgeschrägt ist.

13. Planenaufbau nach Anspruch 11 oder 12,
**dadurch gekennzeichnet, dass**
das wenigstens eine Verbindungsmittel (35) zwischen zwei Schlitten (26) zum Verschieben der wenigstens einen Mittelrunge (12) vorgesehen ist und/oder dass das wenigstens eine Verbindungsmittel (35) zwischen zwei Schlitten (26) zum Verschieben der wenigstens einen Mittelrunge (12) in den Längsspalt (36) des Längsholms (7) eingreift.

14. Planenaufbau nach einem der Ansprüche 1 bis 13,
**dadurch gekennzeichnet, dass**
der Längsholm (7) eine Aufnahme (17) für wenigstens einen mit der Seitenplane (5) verbundenen Schlitten zum Verstellen der Seitenplane (5) entlang des Längsholms (7) aufweist und dass, vorzugsweise, die Aufnahme (17) für den wenigstens einen Schlitten der Seitenplane (5) wenigstens eine Lauffläche zum Abrollen wenigstens einer Rolle des wenigstens einen Schlittens der Seitenplane (5) aufweist.

15. Planenaufbau nach Anspruch 14,
**dadurch gekennzeichnet, dass**
die Aufnahme (17) für den wenigstens einen Schlitten der Seitenplane (5) oberhalb einer Aufnahme (27) für den wenigstens einen Schlitten (26) der wenigstens einen Mittelrunge (12) vorgesehen ist.

## Claims

1. Tarpaulin body (1) of a commercial vehicle, in particular a truck, trailer or semi-trailer, having a floor (11), a longitudinal beam (7) of a roof (2) provided on a longitudinal side (4) of the tarpaulin body (1), at least one central stanchion (12) connected to the longitudinal beam (7) and at least one side canvas (5) for closing the longitudinal side (4) of the tarpaulin body (1), wherein the connection between the at least one central stanchion (12) and the longitudinal beam is provided so as to be adjustable from a position of use for supporting the roof (2) relative to the floor (11) into a position of non-use for displacing the central stanchion (12) along the longitudinal beam (7) and back again, wherein the longitudinal beam (7) comprises at least one beam latch (19) on an inner side (18) facing towards the cargo area (8) or on an outer side (16) facing away from the cargo area (8), wherein the at least one central stanchion (12) comprises a stanchion latch (20) corresponding to the beam latch (19) on an inner side (18) facing towards the cargo area (8) or on an outer side (16) facing away from the cargo area (8), wherein at least one stanchion latch (20) and at least one beam latch (19) are engaged in a form-fitting and/or frictionally fitting manner in at least one longitudinal direction of the longitudinal beam (7) in the position of use and disengaged in the position of non-use,
**characterised in that**
- the longitudinal beam can be sectionally raised and lowered, such that the connection between the at least one central stanchion (12) and the longitudinal beam (7) is formed for adjustment from the position of use into the position of non-use by sectionally raising the longitudinal beam (7) relative to the at least one central stanchion (12) and/or the connection between the at least one central stanchion (12) and the longitudinal beam (7) is formed for adjustment from the position of non-use into the position of use by sectionally lowering the longitudinal beam (7) relative to the at least one central stanchion (12),
- the at least one beam latch (19) and/or the at least one stanchion latch (20) comprise at least one guiding surface (33,34) for positioning the at least one beam latch (19) with respect to the at least one stanchion latch (20) when adjusting from the position of non-use into the position of use and
- the at least one guiding surface (33,34) is tilted in the longitudinal direction of the longitudinal beam (7).

2. Tarpaulin body according to claim 1,
**characterised in that**
at least one tightening device (14) for tightening the at least one side canvas (5) in an at least substantially vertical direction is provided between the at least one longitudinal beam (7) and the floor (11), and **in that**, preferably, the tightening device (14) and the at least one longitudinal beam (7) are designed in such a way, that the sectional raising of the longitudinal beam (7) relative to the at least one central stanchion (12) can be achieved by a relaxation of the at least one side canvas (5) and that a sectional lowering of the longitudinal beam (7) relative to the at least one central stanchion (12) can be achieved by a tightening of the at least one side canvas (5).

3. Tarpaulin body according to claim 1 or 2,
**characterised in that**
the at least one central stanchion (12) comprises a stanchion head (22) which, in the position of use, provides the at least one stanchion latch (20) on the inner side (18) and/or on the outer side (16) of the longitudinal beam (7), and **in that**, preferably, the longitudinal beam (7) rests on the stanchion head (22) in the position of use.

4. Tarpaulin body according to any one of claims 1 to 3,
**characterised in that**
the at least one central stanchion (12) comprises at least one carriage (26) held on the longitudinal beam (7) for displacing the central stanchion (12) in at least one longitudinal direction of the longitudinal beam (7), and **in that**, preferably, the at least one carriage (26) comprises at least one roller (28) for rolling along at least one running surface (29) of the longitudinal beam (7).

5. Tarpaulin body according to claim 4,
**characterised in that**
the at least one carriage (26) of the at least one central stanchion (12) comprises at least one strap (30) connected to the stanchion head (22), in particular in a form-fitting manner, and **in that** the strap (30) is adjustable relative to the stanchion head (22) from a retracted position in the position of use to an extended position in the position of non-use and back.

6. Tarpaulin body according to any one of claims 3 to 5,
**characterised in that**
the at least one carriage (26) comprises two straps (30) connected to the stanchion head (22) for displacing the at least one central stanchion (12) and/or **in that** the at least one central stanchion (12) comprises two carriages (26) for displacing the at least one central stanchion (12).

7. Tarpaulin body according to any one of claims 1 to 6,
**characterised in that**
the at least one central stanchion (12) comprises a stanchion base (25), which is connected to the floor (11) at least in the position of use, and a stanchion slider (24), which is connected to the longitudinal beam (7), in particular to the stanchion head (22), and **in that** the stanchion slider (24) can be pulled out and/or pushed in relative to the stanchion base (25) for the purpose of adjusting the height of the roof (2) and/or for the purpose of raising and/or lowering the at least one central stanchion (12).

8. Tarpaulin body according to claim 7,
**characterised in that**
the stanchion slider (24) and the stanchion base (25) are connected to one another by means of a locking device, **in that** the locking device is adjustable from a driving position blocking the extension and/or the insertion of the stanchion slider (24) relative to the stanchion base (25) into a loading position releasing the extension and/or the insertion of the stanchion slider (24) relative to the stanchion base (25) and back and that, preferably, the locking device comprises a lever mechanism, and/or a toggle lever mechanism, engaging form-fitting in the stanchion slider (24) or the stanchion base (25) in the driving position, in particular comprising a dead centre for automatic locking of the toggle lever mechanism.

9. Tarpaulin body according to any one of claims 1 to 8,
**characterised in that**
the at least one beam latch (19) and/or the at least one stanchion latch (20) comprises at least two guiding surfaces (33, 34), for positioning the at least one beam latch (19) relative to the at least one stanchion latch (20) when adjusting from the position of non-use into the position of use, and **in that** the at least two guiding surfaces (33, 34) are tilted in the longitudinal direction of the longitudinal beam (7).

10. Tarpaulin body according to claim 9,
**characterised in that**
the two guiding surfaces (33, 34) of the beam latch (19) and/or the stanchion latch (20) are each tilted in opposing longitudinal directions of the longitudinal beam (7), and/or **in that** the beam latch (19) or the stanchion latch (20) comprise an at least substantially V-shaped recess and the stanchion latch (20) or the beam latch (19) have a corresponding, at least substantially V-shaped protrusion.

11. Tarpaulin body according to any one of claims 1 to 10,
**characterised in that**
the at least one central stanchion (12), in particular the stanchion head (22) of the at least one central stanchion (12), comprises a connection means (35) for engaging in a longitudinal gap (36) of the longitudinal beam (7) in the position of use, and **in that**, preferably, the longitudinal gap (36) extends in the longitudinal direction of the longitudinal beam (7) between two parallel running surfaces (29) of the longitudinal beam (7).

12. Tarpaulin body according to claim 11,
**characterised in that**
the at least one connection means (35) is designed in the form of a pin or in the form of a rib and/or **in that** the connection means (35) is slanted at least sectionally in a direction parallel to the longitudinal beam (7) for sliding along the longitudinal beam (7) during adjustment into the position of use.

13. Tarpaulin body according to claim 11 or 12,
**characterised in that**
the at least one connection means (35) is provided between two carriages (26) for displacing the at least one central stanchion (12) and/or **in that** the at least one connection means (35) engages in the longitudinal gap (36) of the longitudinal beam (7) between two carriages (26) for displacing the at least one central stanchion (12).

14. Tarpaulin body according to any one of claims 1 to 13,
**characterised in that**
the longitudinal beam (7) comprises a recess (17) for at least one carriage connected to the side canvas (5) for moving the side canvas (5) along the longitudinal beam (7) and **in that**, preferably, the recess (17) for the at least one carriage of the side canvas (5) comprises at least one running surface for rolling at least one roller of the at least one carriage of the side canvas (5).

15. Tarpaulin body according to claim 14,
**characterised in that**
the recess (17) for the at least one carriage of the side canvas (5) is provided above a recess (27) for the at least one carriage (26) of the at least one central stanchion (12).

## Revendications

1. Structure de bâche (1) d'un véhicule utilitaire, notamment d'un poids lourd, d'une remorque ou d'une semi-remorque, avec un plancher (11), un longeron (7) d'un toit (2) prévu sur un côté longitudinal (4) de la structure de bâche (1), au moins un montant central (12) relié au longeron (7) et au moins une bâche latérale (5) destinée à fermer le côté longitudinal (4) de la structure de bâche (1), la jonction entre l'au moins un montant central (12) et le longeron étant prévue réglable au moins entre une position d'utilisation pour supporter le toit (2) par rapport au plancher (11) et une position de non-utilisation pour le déplacement du montant central (12) le long du longeron (7) et inversement, le longeron (7) présentant, sur un côté intérieur (18) dirigé vers le compartiment de chargement (8) ou un côté extérieur (16) détourné du compartiment de chargement (8), au moins un blocage de longeron (19), l'au moins un montant central (12) présentant sur un côté intérieur (18) dirigé vers le compartiment de chargement (8) ou sur un côté extérieur (16) détourné du compartiment de chargement (8) un blocage de montant (20) correspondant au blocage de longeron (19), l'au moins un blocage de montant (20) et l'au moins un blocage de longeron (19) étant en prise par liaison de forme et/ou par friction dans au moins une direction longitudinale du longeron (7) dans la position d'utilisation et étant dégagés dans la position de non-utilisation, **caractérisée en ce que**
- c'est possible de soulever et de baisser le longeron par passages, **en ce que** la jonction entre l'au moins un montant central (12) et le longeron (7) pour le réglage entre la position d'utilisation et la position de non-utilisation est conçue par un soulèvement, par section, du longeron (7) par rapport à l'au moins un montant central (12) et/ou la jonction entre l'au moins un montant central (12) et le longeron (7) pour le réglage entre la position de non-utilisation et la position d'utilisation est conçue par un abaissement, par section, du longeron (7) par rapport à l'au moins un montant central (12),
- l'au moins un blocage de longeron (19) et/ou l'au moins un blocage de montant (20) présentant au moins une surface de guidage (33, 34), pour le positionnement de l'au moins un blocage de longeron (19) par rapport à l'au moins un blocage de montant (20) lors du réglage entre la position de non-utilisation et la position d'utilisation et
- l'au moins une surface de guidage (33, 34) est inclinée dans la direction longitudinale du longeron (7).

2. Structure de bâche selon la revendication 1,
**caractérisée en ce que**
l'on prévoit au moins un dispositif de tension (14) destiné à tendre l'au moins une bâche latérale (5) dans une direction au moins essentiellement verticale entre l'au moins un longeron (7) et le plancher (11) et **en ce que**, de préférence, le dispositif de tension (14) et l'au moins un longeron (7) sont conçus de sorte que le soulèvement, par section, du longeron (7) par rapport à l'au moins un montant central (12) est susceptible d'être actionné par une détente de l'au moins une bâche latérale (5) et par l'abaissement, par section, du longeron (7) par rapport à l'au moins un montant central (12) par la tension de l'au moins une bâche latérale (5).

3. Structure de bâche selon la revendication 1 ou 2,
**caractérisée en ce que**
l'au moins un montant central (12) présente une tête de montant (22) fournissant, dans la position d'utilisation sur le côté intérieur (18) et/ou sur le côté extérieur (16) du longeron (7), l'au moins un blocage de montant (20) et **en ce que**, de préférence, le longeron (7) repose, dans la position d'utilisation, sur la tête de montant (22).

4. Structure de bâche selon l'une des revendications 1 à 3,
**caractérisée en ce que**
l'au moins un montant central (12) présente au moins une glissière (26) maintenue sur le longeron (7) pour le déplacement du montant central (12) dans au moins une direction longitudinale du longeron (7) et **en ce que**, de préférence, l'au moins une glissière (26) présente au moins un rouleau (28) pour le déroulement le long d'au moins une surface de roulement (29) du longeron (7).

5. Structure de bâche selon la revendication 4,
**caractérisée en ce que**
l'au moins une glissière (26) de l'au moins un montant central (12) présente au moins une languette (30) reliée à la tête de montant (22), notamment par liaison de forme, et **en ce que** la languette (30) est susceptible d'être déplacée par rapport à la tête de montant (22) d'une position retractée dans la position d'utilisation en une position déployée dans la position de non-utilisation et inversement.

6. Structure de bâche selon l'une des revendications 3 à 5,
**caractérisée en ce que**
l'au moins une glissière (26) pour le déplacement de l'au moins un montant central (12) présente deux languettes (30) reliées à la tête de montant (22) et/ou **en ce que** l'au moins un montant central (12) présente deux glissières (26) pour le déplacement de l'au moins un montant central (12).

7. Structure de bâche selon l'une des revendications 1 à 6,
**caractérisée en ce que**
l'au moins un montant central (12) présente une base de montant (25) reliée, au moins dans la position d'utilisation, au plancher (11) et une glissière de montant (24) reliée au longeron (7), notamment à la tête de montant (22), et **en ce que** l'on prévoit la glissière de montant (24) extractible et/ou insérable par rapport à la base de montant (25) pour le réglage en hauteur du toit (2) et/ou pour le soulèvement et/ou l'abaissement de l'au moins un montant central (12).

8. Structure de bâche selon la revendication 7,
**caractérisée en ce que**
la glissière de montant (24) et la base de montant (25) sont reliées l'une à l'autre par un dispositif de fixation, **en ce que** le moyen de fixation est susceptible d'être réglé entre une position de marche bloquant l'extraction et/ou l'insertion de la glissière de montant (24) par rapport à la base de montant (25) et une position de chargement libérant l'extraction et/ou l'insertion de la glissière de montant (24) par rapport à la base de montant (25) et inversement et **en ce que**, de préférence, le dispositif de fixation présente un mécanisme à levier et/ou un mécanisme à levier coudé, notamment comportant un point mort pour le verrouillage automatique du mécanisme à levier coudé, entrant en prise, dans la position de marche, par liaison de forme dans la glissière de montant (24) ou dans le base de montant (25).

9. Structure de bâche selon l'une des revendications 1 à 8,
**caractérisée en ce que**
l'au moins un blocage de longeron (19) et/ou l'au moins un blocage de montant (20) présentent au moins deux surfaces de guidage (33, 34) pour le positionnement de l'au moins un blocage de longeron (19) par rapport à l'au moins un blocage de montant (20) lors du réglage entre la position de non-utilisation et la position d'utilisation et **en ce que** les au moins deux surfaces de guidage (33, 34) sont inclinée dans la direction longitudinale du longeron (7).

10. Structure de bâche selon la revendication 9,
**caractérisée en ce que**
les deux surfaces de guidage (33,34) du blocage de longeron (19) et/ou du blocage de montant (20) sont inclinées respectivement dans des directions longitudinales opposées du longeron (7) et/ou **en ce que** le blocage de longeron (19) ou le blocage de montant (20) présentent un logement au moins essentiellement en forme de V et le blocage de montant (20) ou le blocage de longeron (19) présentent une saillie correspondante au moins essentiellement en forme de V.

11. Structure de bâche selon l'une des revendications 1 à 10,
**caractérisée en ce que**
l'au moins un montant central (12), notamment la tête de montant (22) de l'au moins un montant central (12) présente un moyen de jonction (35) destiné à entrer en prise dans une fente longitudinale (36) du longeron (7) dans la position d'utilisation et **en ce que**, de préférence, la fente longitudinale (36) s'étend dans la direction longitudinale du longeron (7) entre deux surfaces de roulement parallèles (29) du longeron (7).

12. Structure de bâche selon la revendication 11,
**caractérisée en ce que**
l'au moins un moyen de jonction (35) est conçu sous la forme d'une goupille ou sous la forme d'une nervure et/ou **en ce que** le moyen de jonction (35) destiné à glisser sur longeron (7) lors du déplacement dans la position d'utilisation est, au moins par section, biseauté dans une direction parallèle par rapport au longeron (7).

13. Structure de bâche selon la revendication 11 ou 12,
**caractérisée en ce que**
l'on prévoit l'au moins un moyen de jonction (35) entre deux glissières (26) pour le déplacement de l'au moins un montant central (12) et/ou **en ce que** l'au moins un moyen de jonction (35) entre deux glissières (26) pour le déplacement de l'au moins un montant central (12) entre en prise dans la fente longitudinale (36) du longeron (7).

14. Structure de bâche selon l'une des revendications 1 à 13,
**caractérisée en ce que**
le longeron (7) présente un logement (17) pour au moins une glissière reliée à la bâche latérale (5) pour le réglage de la bâche latérale (5) le long du longeron (7) et **en ce que**, de préférence, le logement (17) pour l'au moins une glissière de la bâche latérale (5) présente au moins une surface de roulement pour le déroulement d'au moins un rouleau de l'au moins une glissière de la bâche latérale (5).

15. Structure de bâche selon la revendication 14,
**caractérisée en ce que**
l'on prévoit le logement (17) pour l'au moins une glissière de la bâche latérale (5) au-dessus d'un logement (27) pour l'au moins une glissière (26) de l'au moins un montant central (12).
